# EUROPEAN PATENT SPECIFICATION

(11) **EP 0 674 572 B1**
(45) Date of publication and mention of the grant of the patent: **18.02.1998**
(21) Application number: 92907881.4
(22) Date of filing: 06.04.1992
(51) Int. Cl.: B28B 15/00

(54) **PLANT FOR MANUFACTURING CONCRETE SLABS**
ANLAGE ZUM HERSTELLEN VON BETONPLATTEN
INSTALLATION DE FABRICATION DE DALLES EN BETON

(30) Priority: 09.04.1991 SE 9101046
(43) Date of publication of application: 04.10.1995
(73) Proprietor: S:T ERIKS AB, S-750 02 Uppsala (SE)
(72) Inventor: LÖÖV, Björn, S-743 00 Storvreta (SE)
(74) Representative: Lundquist, Lars-Olof
(86) International application number: SE9200220
(87) International publication number: WO9218306

(56) References cited:
- EP-A- 0 018 286
- EP-A- 0 018 356
- CH-A- 566 852
- DK-C- 108 664

## Description

The present invention relates to a plant for manufacturing concrete slabs as defined by the preamble of claim 1.

In manufacturing concrete slabs, according to one known method the slabs are conveyed to a special large hardening chamber by means of trucks and must first be placed on loading pallets with the aid of stackable carrying means. According to another method no special hardening environment is used and the slabs are instead left to harden in the installation itself for a certain period of time under the temperature and humidity conditions prevailing in the premises. A drawback of the first method is that the slabs must first be arranged on loading pallets for transportation by truck and that the transportation and handling of the slabs involve additional cost factors in the manufacturing process. The use of a special hardening chamber also entails added expense. Relatively large premises are also required for such an installation and it cannot operate in a continuous production line because of the truck transport which is carried out at certain intervals. In the second case the hardening process is not accelerated since nothing is done to produce a favourable hardening environment and hardening must take place under the conditions prevailing in the premises. These conditions may vary considerably depending on the time of the year and are extremely unfavourable in regions with low outdoor temperatures and thus lower indoor temperatures. Irrespective of the latter conditions, slabs will be supplied which have not been subjected to the correct hardening conditions and the proportion of defective slabs will therefore be high. This proportion increases the lower the outdoor temperature prevailing at the factory.

Document CH-A-566 852 describes a plant for manufacturing concrete slabs on a continuous production line where they are subjected to favourable hardening conditions, thereby resulting in less rejects among the finished slabs. The plant according to this CH-document requires no special transport vehicles such as trucks, and no separate hardening chamber. Instead, parts of the plant are used to continuously form small hardening chambers as soon as the slabs are collected from the collection station. This CH-document discloses however only single cases to be used.

The invention is substantially characterized in that a plurality of transportable housings or cases are connected to each other by means of coupling members to provide a longer unit of cases which can be moved by the traverse.

The invention will be described in more detail in the following with reference to the accompanying drawings.

Figure 1 is a schematical view from above of a plant according to the invention with a continuous production line with hardening station included therein.

Figure 2 is an end view of a hardening position in the hardening station, included in the plant according to Figure 1, and illustrates the stacking of some of the movable cases.

Figure 3 is an end view of a collection station or a delivery station, both of which are included in the plant according to Figure 1.

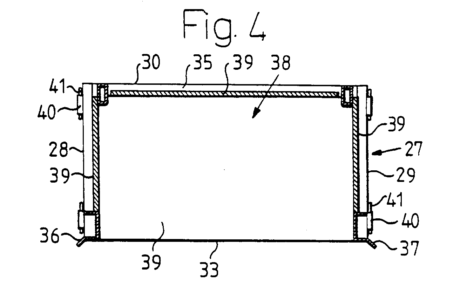

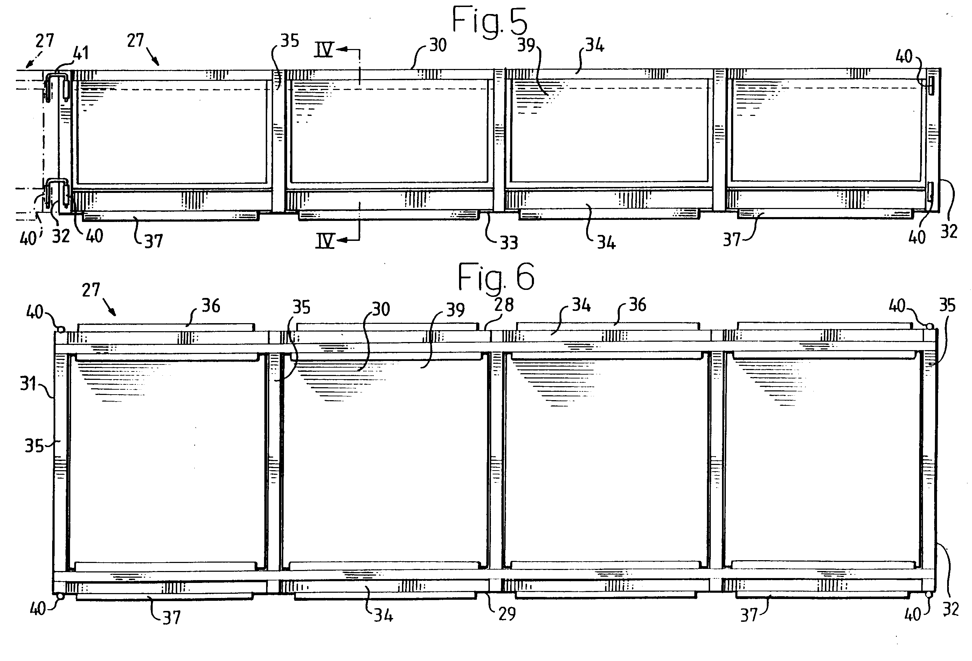

Figures 4, 5 and 6 are a cross-section view, a top view and a side view, respectively, of a case for four trays, Figure 4 being a cross section along the line IV-IV in Figure 5.

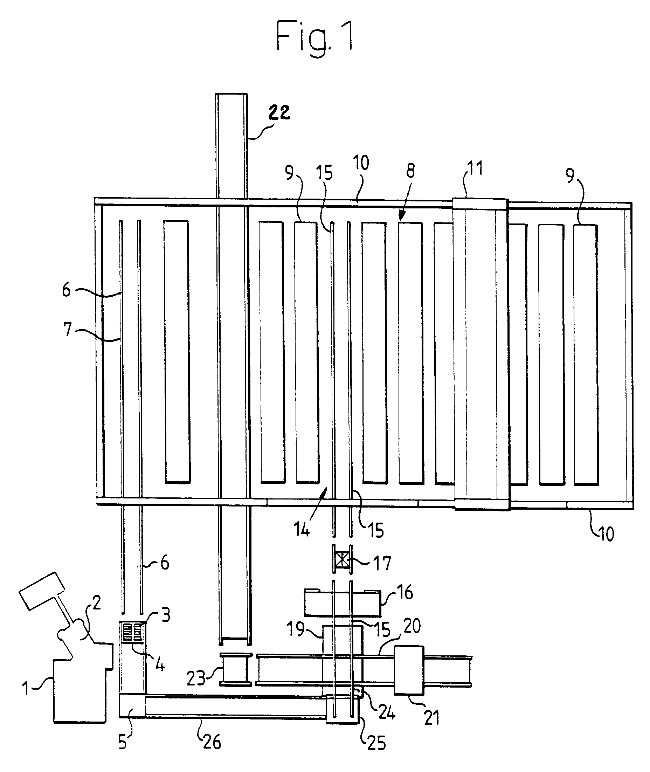

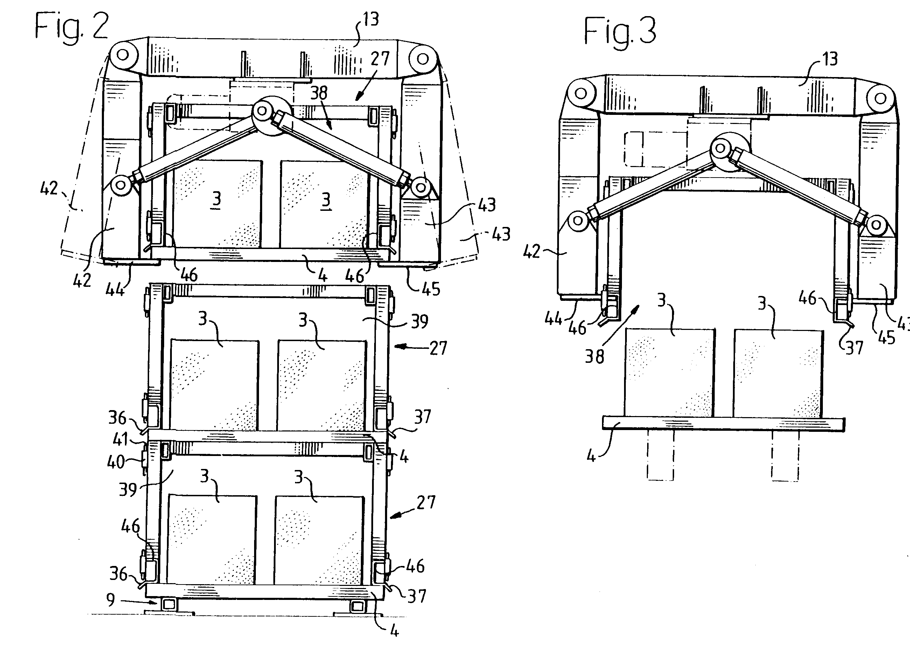

In Figure 1 a plant for manufacturing concrete slabs is shown schematically. The slabs produced are ready for delivery or to be stored for subsequent delivery. The plant comprises a pressing station 1 with a wet press 2 for moulding slabs 3 out of wet concrete according to the embodiment described in SE-A-442 725 (= DE-A-3 311 965), for instance. The moulded slabs are placed side by side standing on edge on trays 4 supplied from a tray store 5 along a horizontal conveyor system 6 which may consist of a plurality of conveyors extending from the tray store 5, past the pressing station 1 and on to a collection station 7. When a predetermined number of slabs 3 have been placed in two rows, for instance, on a tray 4, the filled tray 4 is supplied to the collection station 7. After the collection station is a hardening station 8 which includes a plurality of hardening positions 9, e.g. ten hardening positions as shown in Figure 1, located parallel to each other and to the conveyor in the collection station 7. A traverse railway 10 is arranged above and encompassing the hardening station 8 and collection station 7, said traverse railway supporting a traverse 11 located parallel to the collection station 7 and hardening positions 9. The traverse is provided with a vertically movable yoke 13 (Figure 2). A delivery station 14 is arranged within the compass of the traverse railway 10, and includes a horizontal conveyer line IS extending from a point between two hardening positions 9 up to a strapping station 16 via a turn-table 17. In the strapping station 16 the rows of hardened slabs are secured with suitable bands for delivery or storage pending delivery. The conveyor line 15 continues after the strapping station 16, to a pallet station 19 where a conveyor line 20 passes from a pallet store 21, through the pallet station 19 and on to a feed-out conveyor line 22 via a turn-table 23. In the pallet station 19 the strapped rows of slabs are transferred to a loading pallet which is then transferred to the feed-out conveyor line 22 to be loaded for delivery to a customer or for storage and subsequent delivery while the trays 4 are conducted on a conveyor line 24 past the pallet station 19 and on to a tray lifter 25 for return to the tray store on a conveyor line 26.

The plant also comprises a plurality of transportable, bottomless housings or cases 27, each consisting of two vertical longitudinal sides 28, 29, a top side 30 and two vertical end sides 31, 32. The case 27 is thus entirely open at the lower side 33 and is therefore free from internal construction elements between the end sides 31, 32. The case 27 is composed of a frame of longitudinal and transverse, horizontally and vertically arranged construction elements 34, 35 of metal, such as tubes or rods of suitable sections to form a structural frame. A plurality of guide plates 36, 37 are arranged one after the other at the lower edge of each longitudinal side 28, 29. The guide plates 36, 37 are inclined downwards and outwards at an angle of e.g. 30°. The external width of the case is equivalent to or somewhat greater than the width of a tray 4 so that the case 27 can rest on the tray 4 and is supported thereby. The length of the case, counted as external or internal dimension, is equivalent to or somewhat greater than the combined length of a predetermined number of trays 4 on which the the case 27 is to be placed. In the case shown, four trays 4 are used. The height inside the case 27 is somewhat greater than the height of the slabs 3 placed on the trays 4. It is clear from the drawings and the description above that the case 27 has an interior 38 which is freely accesible from the completely open bottom 33 of the case. The case is directed with the aid of the traverse 11 to immediately above a row of trays 4 and is then lowered vertically towards the row of trays 4 so that the lower frame parts 34 of the longitudinal sides 28, 29 rest on the trays 4. The guide plates 36, 37 assist in guiding the case 27 to the correct position on the trays 4 at the end of the lowering procedure.

The top side 30, longitudinal sides 28, 29 and end sides 31, 32 of the case are closed off by a sheet-like wall material forming airtight walls 39. Net-polymerized polyethylene expanded plastic, frigolite, reduced thin steel plate, aliminium plate, refrigerator panels or mineral wool with a vapour barrier on the inside, for instance, may be used as the sheet-like wall material. These walls 39 thus define an inner space 38 which becomes entirely closed off when the case 27 cooperates with the trays 4. The space 38 closed off in this way thus forms a hardening chamber for hardening the slabs 3 enclosed therein. A considerable part of the heat emitted during hardening of the pressed slabs will remain in the hardening chamber and increased temperature is thus quickly achieved, thereby contributing to continued a more favourable and faster hardening process.

The hardening station may be made large enough to hold two or more cases one after the other in each hardening position. For this purpose two cases are joined together by suitable means to form a unit. In the embodiment shown the coupling members comprise a plurality of vertical sleeves 40 secured to the outside of the long sides 28, 29 on the outer, traverse frame sections, and also of a plurality of U-shaped yokes 41, the legs of which are brought into engagement with the adjacent pairs of sleeves 40 of the two cases.

The yoke 13 of the traverse is provided with gripping devices, each comprising two pivotable side pieces 42, 43 with longitudinal gripping plates 44, 45 at the bottom which can be swung by the side pieces 42, 43 from an outer, inoperative position to an inner, operative position where the gripping plates 44, 45 are brought into engagement with the lower side of the trays 4 in order to lift the trays with their load of slabs and the cases 27 resting on the trays. The gripping devices 42-45 are also used to grip the cases without the trays when they are to be returned from the delivery station 14 to the collection station 7 to be lowered over a new row of trays with slabs for hardening. Recesses (not shown) are provided in the facing edges of the longitudinal gripping plates 44, 45, said recesses being located immediately opposite the vertical tubes or stays 35 of the case so that the gripping plates 44, 45 can be inserted into the U-shaped sections 46 in the lower part of each long side, the U-sections being broken by said stays 35. The recesses also receive the upper end portions of the stays 35 when the gripping plates are to put down a case as illustrated in Figure 2 or lift a case from a stack.

The structural frame of the case 27 is sufficiently strong to allow them, together with their load of trays and slabs, to be stacked on the top of each other in the hardening station 8. In the embodiment shown the traverse 11 is arranged at such a height that three cases can be stacked on the top of each other in each hardening position.

The plant also preferably includes connections for the supply of moist air or steam to the hardening chambers in the cases, enabling the humidity and temperature to be increased or maintained at more controlled levels to further improve the hardening conditions if deemed necessary.

## Claims

1. A plant for manufacturing concrete slabs (3), comprising a pressing station (1), a collection station (7) for collecting pressed slabs (3) placed on identical support trays (4), a hardening station (8) for hardening the slabs (3) conveyed from the collection station (7), a delivery station (14) for delivery of hardened slabs (3), a strapping station (16) for strapping the slabs (3) delivered, a pallet station (19) for transferring the strapped slabs (3) to loading pallets, and transport means for moving the trays (4) and slabs (3) between the various stations, said transport means comprising a traverse (11) arranged to transfer the trays (4) and the slabs (3) stacked thereon from the collection station (7) to the hardening station (8) and thence to the delivery station (14), and a plurality of transportable housings or cases (27) having a width suited to the width of the trays (4) allowing them to be freely carried by the trays (4), each case (27) being entirely open at its lower side (33) enabling it to be lowered by the traverse (11) towards at least one tray (4) to enclose the slabs (3) located thereon, and the upper side (30) of the case and all its vertical sides (28, 29, 31, 32) being closed off by sheets of wall material to produce gas-tight walls (39), the interior (38) of the case being arranged, when in the hardening station (8), to form a hardening chamber for the slabs (3) by means of the enclosure formed by the walls (39) and the enclosing lower side of the case formed by one or more trays, each case (27) having a structural frame of sufficient strength to allow the cases with trays and slabs to be stacked on the top of each other in the hardening station (8), the latter comprising a plurality of hardening positions for stackable cases, characterized in that a plurality of cases (27) are connected to each other by means of coupling members (40, 41) to provide a longer unit of cases which can be moved by the traverse (11).

2. A plant as claimed in claim 1, characterized in that, the wall material consists of net-polymerized polyethylene expanded plastic, frigolite, canvas, reduced thin steel plate, aluminium plate, refrigerator panels or mineral wool with a vapour barrier on the inside.

## Patentansprüche

1. Anlage zur Herstellung von Beton-Platten (3), umfassend eine Presstation (1), eine Sammelstation (7) zum Sammeln gepreßter Platten (3), die auf einheitlichen Ablegetischen (4) aufliegen, eine Härte-Station (8) zum Härten der von der Sammelstation (7) herbeitransportierten Platten (3), eine Auslieferstation (14) zum Ausliefern der gehärteten Platten (3), eine Bindestation (16) zum Umbinden der angelieferten Platten (3), eine Palettenstation (19) zum Weiterbefördern der gebundenen Platten (3) zu Ladepaletten, und Transportmittel zum Befördern der Ablegetische (4) und der Platten (3) zwischen den verschiedenen Stationen, wobei diese Transportmittel einen Traversenkran (11) umfassen, der dazu vorgesehen ist, die Ablegetische (4) und die darauf aufliegenden Platten (3) von der Sammelstation (7) zur Härter-Station (8) und von der zur Auslieferstation (14) zu transportieren, und eine Mehrzahl von transportablen Gehäusen oder Verschahlungen, die eine Größe passend zur Größe der Ablegetische (4) aufweisen, so daß sie von den Ablegetischen (4) frei bewegt werden können, wobei jedes Gehäuse (27) an seiner Unterseite (33) vollständig offen ist, so daß es von dem Traversenkran (11) auf wenigstens einen Ablegetisch (4) zur Aufnahme der Platten (3), die darauf gelagert sind, heruntergelassen werden kann, und die Oberseite (30) des Gehäuses und alle ihre vertikalen Seiten (26, 29, 31, 32) durch Platten aus Wandmaterial abgeschlossen sind, um gasdichte Wände zu bilden, wobei der Innenraum (38) des Gehäuses, wenn er sich in der Härte-Station (8) befindet, durch die von den Wänden (39) ausgebildete Verkleidung und die abschließende untere Seite des Gehäuses, die von einem oder mehreren Ablegetischen gebildet wird, eine Härtekammer für die Platten (3) bildet, wobei jedes Gehäuse (27) ein Gerüst von ausreichender Festigkeit aufweist, um die Gehäuse mit den Ablegetischen und den Platten in der Härte-Station (8) übereinander zu stapeln, wobei letztere eine Mehrzahl von Härtepositionen für stapelbare Gehäuse aufweist, dadurch gekennzeichnet, daß eine Mehrzahl von Gehäusen (27) miteinander durch Verbindungsmittel (40, 41) miteinander verbunden sind, um eine längere Einheit aus Gehäusen zu bilden, die von dem Traversenkran (11) bewegt werden kann.

2. Anlage nach Anspruch 1, dadurch gekennzeichnet, daß das Wandmaterial aus expandiertem netz-polymerisierten Polyethylen-Kunststoff oder Frigolit, Segelleinwand, abgeschwächten dünnen Stahlplatten, Aluminiumplatten, Kühlraumplatten oder Mineralwolle mit einer Dampfsperre auf der Innenseite besteht.

## Revendications

1. Installation pour la fabrication de dalles (3) en béton, comprenant une station de compression (1), une station de collectage (7) pour collecter les dalles (3) comprimées placées sur des plateaux supports (4) identiques, une station de durcissage (8) pour durcir les dalles (3) convoyées depuis la station de collectage (7), une station de décharge (14) pour décharger les dalles (3) durcies, une station de liage (16) pour lier les dalles (3) déchargées, une station de palettisation (19) pour transférer les dalles (3) liées à des palettes de chargement, et des moyens de transport pour déplacer les plateaux (4) et les dalles (3) entre les différentes stations, lesdits moyens de transport comprenant une traverse (11) disposée pour transférer les plateaux (4) et les dalles (3) empilées dessus depuis la station de collectage (7) vers la station de durcissage (8) et ainsi vers la station de décharge (14), et des enveloppes ou boîtiers (27) transportables ayant une largeur adaptée à la largeur des plateaux (4) leur permettant d'être transportés librement par les plateaux (4), chaque boîtier (27) étant entièrement ouvert à sa face inférieure (33) en lui permettant d'être abaissé par la traverse (11) vers au moins un plateau (4) pour enfermer les dalles (3) disposées dessus, et la face supérieure (30) du boîtier et toutes ses faces verticales (28, 29, 31, 32) étant refermées par des feuilles de matériau de paroi pour constituer des parois (39) étanches au gaz, l'intérieur (38) du boîtier étant disposé, lorsqu'il est dans la station de durcissage (8), pour former une chambre de durcissage pour les dalles (3) au moyen de l'enceinte formée par les parois (39) et la face inférieure de fermeture du boîtier formé par un ou plusieurs plateaux, chaque boîtier (27) ayant un cadre de structure de solidité suffisante pour permettre que les boîtiers avec des plateaux et des dalles soient empilés l'un sur l'autre dans la station de durcissage (8), cette dernière comprenant des emplacements de durcissage pour des boîtiers empilables, caractérisée en ce que des boîtiers (27) sont reliés l'un à l'autre au moyen d'éléments de couplage (40, 41) pour créer une unité plus longue de boîtiers qui peut être déplacée par la traverse (11).

2. Installation selon la revendication 1, caractérisée en ce que le matériau de paroi consiste en matière plastique expansée du type polyéthylène polymérisé en treillis, frigolite, canevas, plaque d'acier mince réduite, plaque d'aluminium, panneaux de réfrigération ou laine minérale avec un pare-vapeur sur la face interne.
